(19)

Europäisches Patentamt

European Patent Office

Office européen des brevets

(11) **EP 2 670 147 A2**

(12) **EUROPEAN PATENT APPLICATION**

(43) Date of publication:
04.12.2013 Bulletin 2013/49

(51) Int Cl.:
**H04N 13/00** (2006.01)

(21) Application number: **13166643.0**

(22) Date of filing: **06.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.05.2012 JP 2012121154**
**04.04.2013 JP 2013078679**

(71) Applicant: **Ricoh Company, Ltd.**
**Tokyo 143-8555 (JP)**

(72) Inventors:
• **Yoshida, Jun**
**Japan, 143-8555 (JP)**
• **Yokota, Soichiro**
**Tokyo, 143-8555 (JP)**

(74) Representative: **Schwabe - Sandmair - Marx Patentanwälte**
**Stuntzstraße 16**
**81677 München (DE)**

(54) **Abnormality diagnosis device and method, imager including the abnormality diagnosis device, mobile vehicle control system and mobile vehicle**

(57)    An abnormality diagnosis device for stereo camera, includes a parallax computer to produce parallax image data from stereo image data photographed by the stereo camera; and a camera abnormality detector to determine whether the parallax image data are normal or not, and to judge the stereo camera to be normal when the parallax image data are normal and abnormal when the parallax image data are abnormal.

FIG. 4

EP 2 670 147 A2

## Description

BACKGROUND OF THE INVENTION

Field of the Invention

The present invention relates to an abnormality diagnosis device and method of stereo camera, an imager including the abnormality diagnosis device, a mobile vehicle control system and a mobile vehicle including the mobile vehicle control system.

Description of the Related Art

Conventionally, it is known that a mobile vehicle such as cars is equipped with an imager including a stereo camera to photograph a front of the mobile vehicle and produce a stereo image, the stereo image is processed to recognize an obstacle and measure a distance thereto, and that a driver of the mobile vehicle is warned not to collide and a brake and a steering are controlled to keep a distance between cars.

In such an imager including a stereo camera, which is used in a mobile vehicle such as cars (in-vehicle imager), unless the stereo camera normally works, reliability of the image processing is impaired, i.e., an obstacle is not correctly recognized or a distance thereto is not correctly measured. In order to assure reliability and safeness of image processing and control, it is necessary to monitor abnormality of the stereo camera and suspend image processing and control when in abnormal state.

In Japanese Patent No. JP-4285618-B1 (Japanese published unexamined application No. JP-2008-284389-A), when a mechanical position gap between stereo cameras is subjected to self-diagnosis and image conversion corrects the mechanical position gap, an abnormal state of the stereo camera is detected from dispersion of brightness variation of an image photographed thereby. When the brightness variation is small, the reliability of calculation of the position gap is low and the calculation is suspended. However, only the dispersion of brightness variation cannot tell the abnormality of the camera is due to the camera itself such as a position gap of pair of the cameras and blurred lens or an outer environment such as high contrast between backlight and darkness.

In Japanese Patent No. JP-3092106-B1 (Japanese published unexamined application No. JP-H03-254733-A), when vehicle exterior is monitored from distance data, reliability of the distance data is judged from variation of distance data in a specific area in an image photographed by the stereo camera, and monitoring the vehicle exterior is suspended when the reliability is low. However, the reliability is not correctly judged, depending on an outer environment such as road surface condition and outlook, and a mounting position of pair of the cameras. For example, the variation of the distance data is large when the road surface has accumulated snow on without a track, and assumed to be judged abnormal. When the camera is shifted inside, the variation of the distance data is assumed to be small and judged normal although the distance is not correctly measured.

Because of these reasons, a need exist for enabling it to judge abnormality of a stereo camera without influence of outer environments such as high contrast between backlight and darkness, and road surface conditions.

SUMMARY OF THE INVENTION

Accordingly, one object of the present invention to provide an abnormality diagnosis device for stereo camera without influence of outer environments such as high contrast between backlight and darkness, and road surface conditions.

Another object of the present invention to provide a method of abnormality diagnosis for stereo camera without influence of outer environments such as high contrast between backlight and darkness, and road surface conditions.

A further object of the present invention to provide an imager using the abnormality diagnosis device.

These objects and other objects of the present invention, either individually or collectively, have been satisfied by the discovery of an abnormality diagnosis device for stereo camera, comprising:

a parallax computer configured to produce parallax image data from stereo image data photographed by the stereo camera; and
a camera abnormality detector configured to determine whether the parallax image data are normal or not, and to judge the stereo camera to be normal when the parallax image data are normal and abnormal when the parallax image data are abnormal.

These and other objects, features and advantages of the present invention will become apparent upon consideration of the following description of the preferred embodiments of the present invention taken in conjunction with the accompanying drawings.

BRIEF DESCRIPTION OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

FIG. 1 is a functional block diagram of an embodiment of the present invention;
FIG. 2 is a view showing image data of pair of cameras and parallax image data in a memory;

FIG. 3 is a view for explaining measurement of a distance to a photographic subject;

FIG. 4 is a general process flowchart of stereo camera abnormality diagnosis of the embodiment;

FIG. 5 is a detailed flowchart of normality/abnormality determination process of parallax image data;

FIG. 6A is a view for explaining normality/abnormality of parallax image data;

FIG. 6B is another view for explaining normality/abnormality of parallax image data;

FIG. 6C is a further view for explaining normality/ abnormality of parallax image data;

FIG. 6D is another view for explaining normality/abnormality of parallax image data;

FIG. 6E is a further view for explaining normality/ abnormality of parallax image data;

FIG. 6F is another view for explaining normality/abnormality of parallax image data;

FIG. 6G is a view for explaining normality/abnormality of a parallax value;

FIG. 7 is a detailed flowchart of normality/abnormality determination process of stereo image data;

FIG. 8A is a view for explaining normality/abnormality of stereo image data;

FIG. 8B is another view for explaining normality/abnormality of stereo image data;

FIG. 8C is a further view for explaining normality/ abnormality of stereo image data; and

FIG. 9 is a schematic view illustrating an embodiment of a vehicle equipped with the vehicle control system of the present invention.

## DETAILED DESCRIPTION OF THE INVENTION

The present invention provides an abnormality diagnosis device for stereo camera without influence of outer environments such as high contrast between backlight and darkness, and road surface conditions.

More particularly, the present invention relates to an abnormality diagnosis device for stereo camera, comprising:

a parallax computer configured to produce parallax image data from stereo image data photographed by the stereo camera; and
a camera abnormality detector configured to determine whether the parallax image data are normal or not, and to judge the stereo camera to be normal when the parallax image data are normal and abnormal when the parallax image data are abnormal.

Exemplary embodiments of the present invention are described in detail below with reference to accompanying drawings. In describing exemplary embodiments illustrated in the drawings, specific terminology is employed for the sake of clarity. However, the disclosure of this patent specification is not intended to be limited to the specific terminology so selected, and it is to be understood that each specific element includes all technical equivalents that operate in a similar manner and achieve a similar result. Hereinafter, an embodiment of the abnormality diagnosis apparatus for a stereo camera of the present invention is explained. An application thereof to a vehicle control system is explained, but is not limited thereto. The vehicle includes airplanes, ships, etc,

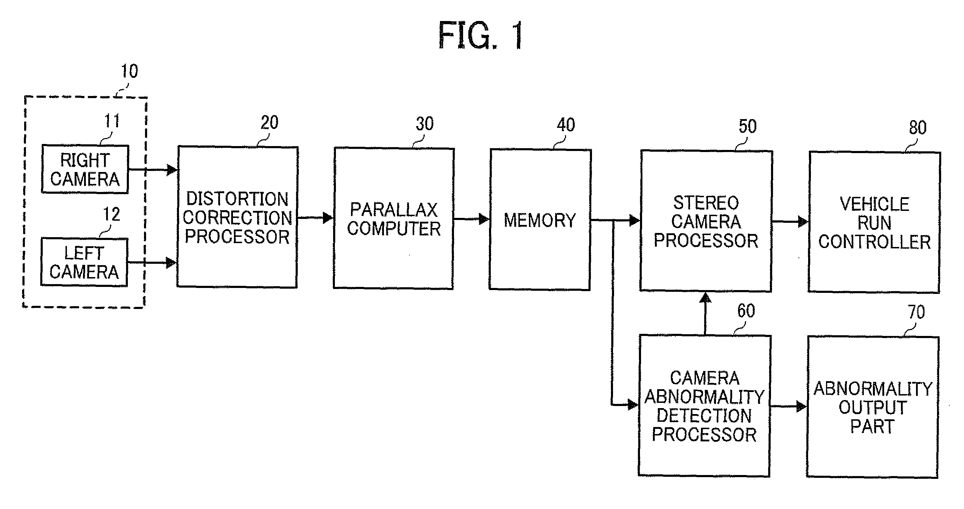

FIG. 1 is a general functional block diagram of an embodiment of a vehicle control system including an imager (car-mounted imager) equipped with the abnormality diagnosis device and its peripheral devices. The imager is formed of a stereo camera 10 including a right camera 11 and a left camera 12, a distortion correction processor 20, a parallax computing part 30, a memory 40, a stereo camera processor 50, a camera abnormality detection processor 60 and an abnormality output part 70. Among these, the parallax computing part 30, the memory 40 and the camera abnormality detection processor 60 work as the abnormality diagnosis device as well. A vehicle run controller 80 includes an automatic transmission controller, a brake controller, a steering controller, etc.

Each part except for the stereo camera 10 and the vehicle run controller 80 is typically formed of a computer device. Specifically, the distortion correction processor 20, the parallax computing part 30, the stereo camera processor 50 and the camera abnormality detection processor 60 work based on CPU, programs, etc. The memory 40 is a ROM, a RAM, etc. and stores programs executed by the CPU, parameters and tables needed for processes by the CPU, data on the way and resultant data thereby, etc. The abnormality output part 70 is a display, an audio output device or an alarm lamp, and notifies a user of abnormality of the cameras 11 and 12. An operation entry part is omitted in FIG. 1.

The right camera 11 and the left camera 12 are located at a predetermined interval (base-line length) such that their light axes are in parallel, act in synchronization with each other to photograph a subject from different standpoints respectively, convert the optical image into an analog electrical signal, and further convert the analog electrical signal to a digital signal to output image data. The image data are, e.g., forked of 8 bits/ pixel and have 0 to 255 tones (luminance value).

The distortion correction processor 20 corrects distortion of respective image data produced from the right camera 11 and the left camera 12, which is due to mounting position gaps thereof. A method disclosed in "A flexible new technique for camera calibration" IEEE Transactions on Pattern Analysis and Machine Intelligence, 22(11) : 1330-1334, 2000 can be used to correct the distortion. When the mage data produced from the right camera 11 and the left camera 12 are color image data, the distortion correction processor 20 converts the color image data into monochrome image data (luminance image data) and corrects the distortion thereof.

The parallax computing part 30 receives two (stereo) image data, the distortions of which are corrected of the right camera 11 and the left camera 12, and computes a parallax for each microscopic area to produce parallax image data. A known block matching method is used to compute a parallax. Namely, a microscopic area a is cut from (luminance) image data of the right camera 11 and a microscopic area b is cut from (luminance) image data of the right camera 12, and a location of a correspondent point is searched, moving the location of the microscopic area b in a predetermined range, based on the location of the microscopic area a. A difference of the searched correspondent point is a parallax. The block matching is repeated on the two image data of the right camera 11 and the left camera 12 to obtain a parallax value of each of the microscopic area of all the stereo image data thereof, i.e., parallax image data.

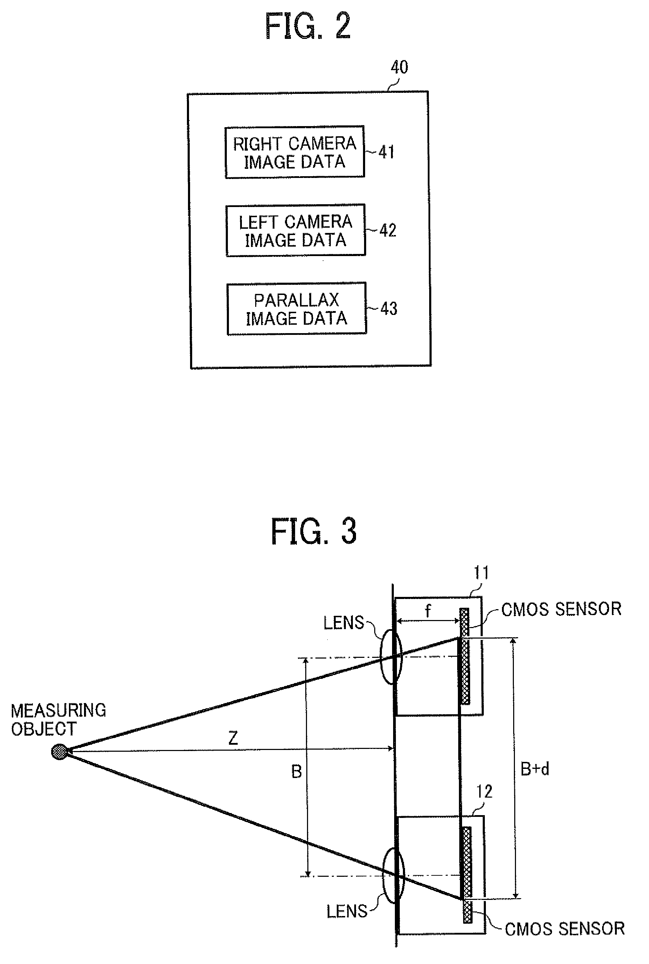

The parallax image data computed by the parallax computing part 30 and respective image data (luminance image data) of the right camera 11 and the left camera 12 are stored in the memory 40. This is shown in FIG. 2. Although omitted in FIG. 2, a parallax value distribution (parallax histogram) mentioned later is stored in the memory 40 as well.

The stereo camera processor 50 reads image data (luminance image data) 41 and 42 of the right camera 11 and the left camera 12 and parallax image data 43 in from the memory 40 to do image recognition of an obstacle and measure a distance thereto. These processes are called stereo camera processes. A distance Z to the obstacle is determined by the following formula (1) using the parallax image data 43.

$$Z = B \times f/d \ (1)$$

wherein B represents a distance (base-line length) between light axes of the cameras 11 and 12; f represents a focal length of the cameras 11 and 12; and d represents a parallax. FIG. 3 is a conceptual diagram of measuring the distance by a stereo camera.

The vehicle run controller 80 executes control of vehicle run, etc. according to the processing results of the stereo camera processor 50, such as control of braking and steering to keep inter-vehicle gap.

The camera abnormality detection processor 60 reads image data (luminance image data) 41 and 42 of the right camera 11 and the left camera 12 and parallax image data 43 in from the memory 40 to do abnormality diagnosis of the cameras 11 and 12. Judging the cameras 11 and 12 to be abnormal, the camera abnormality detection processor 60 notifies the stereo camera processor 50 and the abnormality output part 70 of the abnormality of the cameras 11 and 12.

Being notified of the abnormality of the cameras 11 and 12 from the camera abnormality detection processor 60, the stereo camera processor 50 suspends the stereo camera processing. Consequently, operation mode of the vehicle run controller 80 is suspended.

Being notified of the abnormality of the cameras 11 and 12 from the camera abnormality detection processor 60, the abnormality output part 70 notifies a user of the abnormality of the cameras, specifically with display, sound or buzzer. Thereby, the user (driver) recognizes that the vehicle run controller 80 does not work.

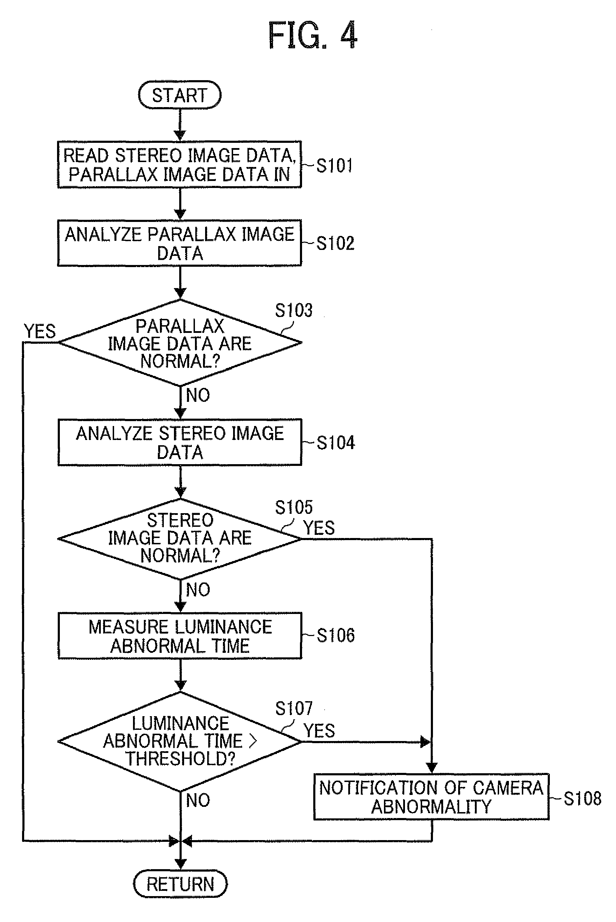

Hereinafter, the camera abnormality detection processor 60 is explained in detail. FIG. 4 is a process flowchart of an embodiment of the camera abnormality detection processor 60.

The camera abnormality detection processor 60 reads respective image data, i.e., stereo image data of the right camera 11 and the left camera 12 and parallax image data in from the memory 40 (STEP 101). Then, first the parallax image data are analyzed (STEP 102) and whether the parallax image data are normal is judged (STEP 103). Whether the parallax image data are normal is judged from a parallax value distribution and a variation thereof of the parallax image data. When the parallax image data are judged normal (YES in STEP 103), the cameras 11 and 12 are regarded as normal and the step goes to RETURN. In this case, another process starts from STEP 101 after a specific time passes.

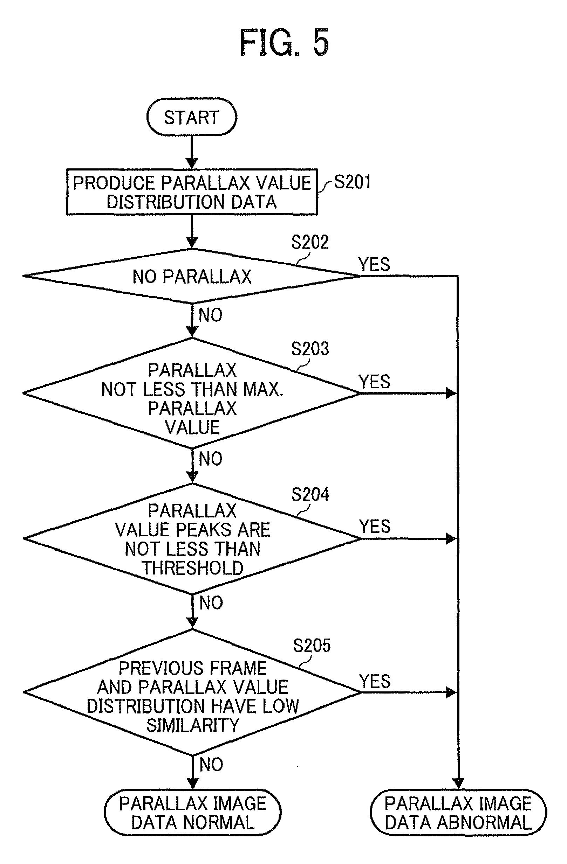

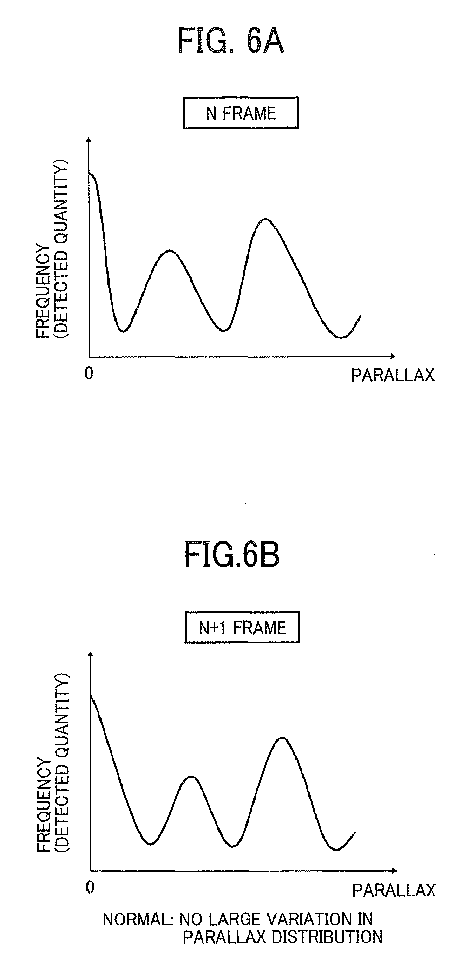

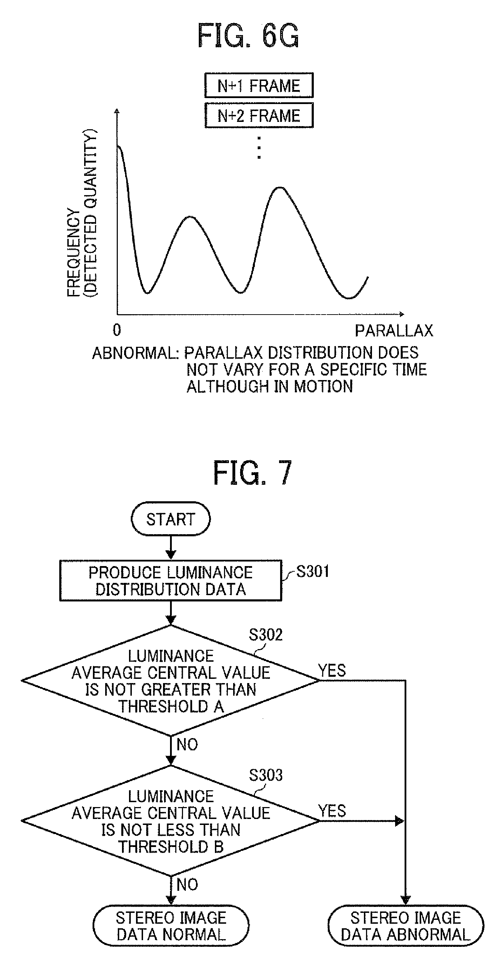

FIG. 5 is a detailed flowchart of normality/abnormality determination process of parallax image data. FIGS. 6A to 6G are specific examples of the normal/abnormal parallax image data. FIG. 6A is a parallax value distribution of N frame (parallax histogram), each of FIGS. 6B to 6F is a parallax value distribution of N+1 frame (parallax histogram), and FIG. 6G is a parallax value distribution of N+1, N+2, ··· frame (parallax histogram).

A camera abnormality detection processor 60 produces a parallax value distribution (parallax histogram) of parallax image data (STEP 201). The produced parallax value distribution data are stored in the memory 40. The oldest parallax value distribution data in the memory 40 are deleted first. The camera abnormality detection processor 60 sequentially executes STEPS 202 to 205 on the produced parallax value distribution (parallax histogram) data. When judged "YES" in any one of the STEPS, the parallax image data are determined abnormal. When "NO", they are determined normal. The order of the STEPS 202 to 205 may be random.

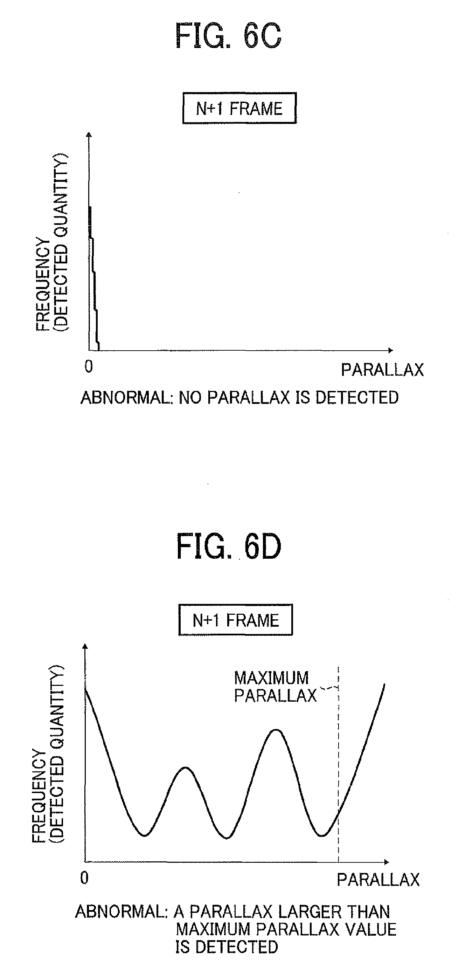

STEP 202 judges parallax image data abnormal when parallax is scarcely detected. FIG. 6C is this case. This is when image data are not produced from one of the cameras 11 and 12 due to disconnection, etc.

STEP 203 judges parallax image data abnormal when a parallax not less than a maximum parallax value (parallax value at the closest point) is detected. FIG. 6D is this case. This is, e.g., when base lines of the cameras 11 and 12 are extended due because a temperature therearound increases.

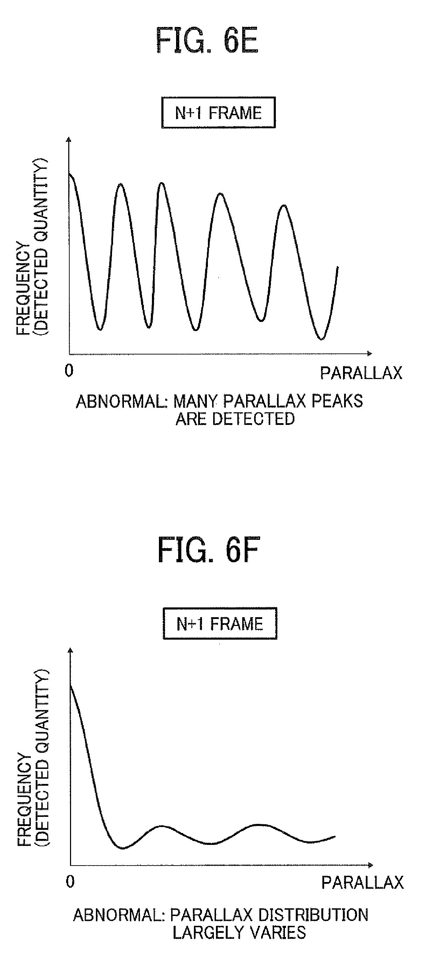

STEP 204 judges parallax image data abnormal when parallax value peaks not less than a threshold are detected (the parallax value distribution largely varies or the parallax values are distributed on average). FIG. 6E is this case. This is, e.g., when the cameras 11 and 12 are unsynchronized.

STEP 205 judges parallax image data abnormal when a parallax value distribution of a current frame and that of a previous frame have a correlation (similarity) not greater than a specific value (e.g., a correlation coefficient not greater than 0.7). Namely, when the parallax value distribution of the current frame is different from that of the previous frame, the parallax image data abnormal is determined abnormal. FIG. 6F is this case. Compared with a parallax value distribution of a previous frame (N frame) of FIG. 6A, a parallax value distribution of a current frame (N+1 frame) of FIG. 6F largely varies. This is when exposure control does not properly work or the cameras 11 and 12 are unsynchronized. On the other hand, in FIG. 6B, N frame and N+1 frame do not have a large difference in their parallax value distributions. Namely, a correlation of parallax value distributions between two frames is not less than a specific value (e.g., a correlation coefficient not less than 0.7). The parallax image data are judged normal in this case.

When a vehicle equipped with the imager travels, the parallax value distribution should varies every minute normally. When a vehicle travels, the camera abnormality detection processor 60 checks variations of parallax value distributions of the past some ten to some hundred frames besides judgment of STEPS 202 to 205 in FIG. 5, and judges parallax image data abnormal when there is no variation in the parallax value distributions. FIG. 6G is this case. This is when, e.g., both of the cameras 11 and 12 break down, and no image data are produced and image data in the memory 40 are not renewed.

In FIG. 4, judging the parallax image data to be normal (YES in STEP 103), the camera abnormality detection processor 60 returns assuming the cameras 11 and 12 are normal. In this case, the process starts again from STEP 101 after a predetermined time has passed.

On the contrary, judging the parallax image data to be abnormal (NO in STEP 103), the camera abnormality detection processor 60 analyzes stereo image data of the cameras 11 and 12 (STEP 104) to judge whether they are normal (STEP 105). Whether the stereo image data are normal depends on a luminance distribution (histogram) of each of the (luminance) image data of the right and left cameras 11 and 12. For example, an average value or a medium value of the luminance is over a threshold, they are judged to be abnormal (improper).

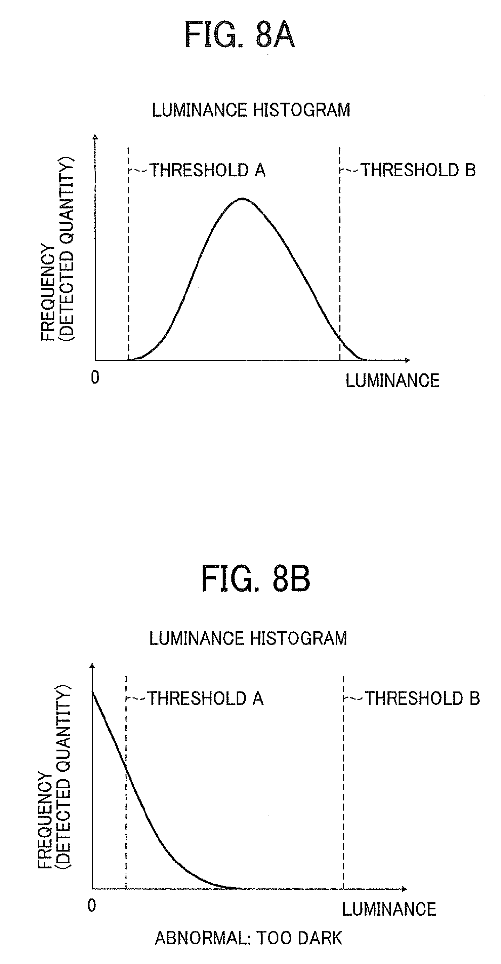

FIG. 7 is a detailed flowchart of normality/abnormality determination process of stereo image data. FIGS. 8A to 8C are specific examples of the normal/abnormal stereo image data. Each of FIGS. 8A to 8C shows a luminance distribution (histogram) of (luminance) image data of the right and left cameras 11 and 12.

The camera abnormality detection processor 60 produces luminance distributions (histograms) of respective (stereo) image data of the right and left cameras 11 and 12 (STEP 301). The camera abnormality detection processor 60 sequentially executes STEPS 302 and 303, and when judged "YES" in either of the STEPS, the stereo image data is determined abnormal. When "NO" in both of the steps, the stereo image data is determined normal (proper). The threshold is A<B. The order of STEPS 302 and 303 may be reversed.

STEP 302 judges stereo image data abnormal (not proper: too dark) when an average or central value of luminance is not greater than a threshold A in either or both of the respective image data of the right and left cameras 11 and 12. FIG. 8B is this case.

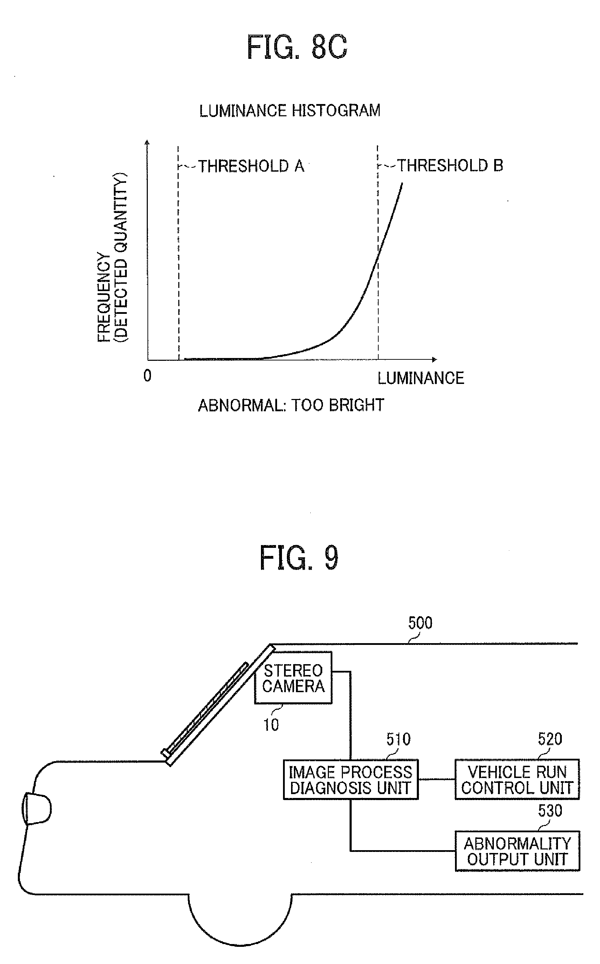

STEP 303 judges stereo image data abnormal (not proper: too bright) when an average or central value of luminance is not greater than a threshold B in either or both of the respective image data of the right and left cameras 11 and 12. FIG. 8C is this case.

In FIG. 8A, an average or central value of luminance is within a range of the upper and lower thresholds A and B, and the stereo image data are judged normal (proper).

In FIG. 4, when the parallax image data are abnormal (NO in STEP 103) and the stereo image data of the right and left cameras 11 and 12 are normal (YES in STEP 105), the camera abnormality detection processor 60 notifies the stereo camera processor 50 and the abnormality output part 70 of the abnormality of the right and left cameras 11 and 12 (STEP 108) and returns. Namely, when the parallax image data are abnormal and each of the image luminance of the right and left cameras 11 and 12 is normal (proper), the abnormal parallax image data (parallax value abnormality) is thought to abnormality of the right and left cameras 11 and 12 themselves, and STEP 108 is taken.

When the parallax image data are abnormal (NO in STEP 103) and each of the image luminance of the right and left cameras 11 and 12 is abnormal (NO in STEP 105), a time for the stereo image data to continue to have luminance abnormality is measured (STEP 106). Whether the time to continue to have luminance abnormality is over a predetermined time is checked (STEP 107), and STEP 108 is taken when over and the STEP returns when not over. Namely, when the abnormal luminance is finished in a short time, e.g., a few seconds, the abnormal parallax image data are thought to be due to a temporary factor such as temporary backlight, darkness and road surface conditions of imaging (external) environment of the right and left cameras 11 and 12, and nothing is changed as it is.

When the abnormal luminance of the stereo image data continues for a long time, the abnormal parallax image data (abnormal parallax value) continue for a long time as well, the stereo camera processor 50 is not assured to have reliability, and consequently the vehicle run controller 80 is not assured to have reliability, either. In this case, the camera abnormality detection processor 60 notifies the stereo camera processor 50 of the camera abnormality (STEP 108) such that the stereo camera processor 50 suspends processing, and the vehicle run controller 80 can suspend controlling.

FIG. 9 is a schematic view illustrating an embodiment of a vehicle equipped with the vehicle control system of the present invention. In FIG. 9, a stereo camera 10 formed of the right and left cameras is located at a front window of a vehicle (such as an automobile) 500 so that it can photograph images in front of the vehicle running. An image process diagnosis unit 510 is formed of the distortion correction processor 20, the parallax computer 30, the memory 40, the stereo camera processor 59, the camera abnormality detection processor, etc. in FIG. 1. A vehicle run control unit 520 is equivalent to the vehicle run controller 80 and an abnormality output unit 530 is equivalent to the abnormality output part 70.

The stereo camera 10 photographs the front of the vehicle and produces stereo image data. The image process diagnosis unit 510 processes the stereo image data produced by the stereo camera 10 to perform image recognition of an obstacle and distance computation thereto. The vehicle run control unit 520 controls brake and steering to maintain inter-vehicular distance and avoid collision according to process results of the image process diagnosis unit 510. In addition, the image process diagnosis unit 510 analyzes the stereo image data produced by the stereo camera 10 to diagnose whether the stereo camera 10 is normal or abnormal. When the stereo camera 10 is abnormal, it notifies a driver of the camera abnormality through the abnormality output unit 530 and stops operation of the vehicle run control unit 520.

The camera abnormality detection processor 60 may judge whether the right and left cameras 11 and 12 are abnormal as the stereo camera 10 only with the parallax image data. Namely, when the parallax image data are normal, the right and left cameras 11 and 12 are judged to be normal, and when the parallax image data are abnormal, the right and left cameras 11 and 12 are judged to be abnormal. In addition, the stereo cameras may not be for vehicles.

Having now fully described the invention, it will be apparent to one of ordinary skill in the art that many changes and modifications can be made thereto without departing from the spirit and scope of the invention as set forth therein.

**Claims**

1. An abnormality diagnosis device for stereo camera, comprising:

   a parallax computer (30) configured to produce parallax image data from stereo image data photographed by the stereo camera; and
   a camera abnormality detector (60) configured to determine whether the parallax image data are normal or not, and to judge the stereo camera to be normal when the parallax image data are normal and abnormal when the parallax image data are abnormal.

2. The abnormality diagnosis device of Claim 1, wherein the camera abnormality detector determines whether the parallax image data are normal or not from a status of a parallax value distribution of the parallax image data.

3. The abnormality diagnosis device of Claim 1 or 2, wherein the camera abnormality detector further determines whether the stereo image data are normal or not when the parallax Image data are abnormal, and judges the stereo camera to be abnormal when the stereo image data are normal.

4. The abnormality diagnosis device of Claim 3, wherein the camera abnormality detector further determines whether the stereo image data are normal or not from a status of a luminance distribution of the stereo image data.

5. The abnormality diagnosis device of Claim 3 or 4, wherein the camera abnormality detector measures an abnormality duration time of the stereo image data when abnormal, and determines the stereo camera is normal when the abnormality duration time is not longer than a predetermined time and abnormal when longer than the predetermined time.

6. A method of diagnosing abnormality of stereo camera, comprising:

   producing parallax image data from stereo image data photographed by the stereo camera; and
   determining whether the parallax image data are normal or not to judge the stereo camera to be normal when the parallax image data are normal, and abnormal when the parallax image data are abnormal.

7. An imager, comprising:

   a stereo camera (11 and 12) configured to photograph stereo image data;
   a stereo camera processor (50) configured to process the stereo image data; and
   the abnormality diagnosis device according to any one of Claims 1 to 5.

8. The imager of Claim 7, wherein the camera abnormality detector of the abnormality diagnosis device notifies the stereo camera processor of abnormality of the stereo camera when judging the stereo camera to be abnormal, and the stereo camera processor stops processing when notified of abnormality of the stereo camera by the camera abnormality detector.

**9.** The imager of Claim 7 or 8, further comprising an abnormality output means (70) configured to output abnormality of the stereo camera, wherein the camera abnormality detector of the abnormality diagnosis device notifies the abnormality output means of abnormality of the stereo camera when judging the stereo camera to be abnormal, and the abnormality output means outputs abnormality of the stereo camera when notified thereof by the camera abnormality detector.

**10.** A mobile vehicle control system, comprising:

the imager according to any one of Claims 7 to 9; and
a mobile vehicle control means (80) configured to control a mobile vehicle according to a process result of the stereo camera processor of the imager.

**11.** A mobile vehicle loaded with the mobile vehicle control system according to Claim 10.

# FIG. 1

EP 2 670 147 A2

# FIG. 2

RIGHT CAMERA IMAGE DATA ~41

LEFT CAMERA IMAGE DATA ~42

PARALLAX IMAGE DATA ~43

40

# FIG. 3

11

f

LENS

CMOS SENSOR

MEASURING OBJECT

Z

B

B+d

12

LENS

CMOS SENSOR

# FIG. 4

```
                    ( START )
                        |
                        v
        +-------------------------------+
        | READ STEREO IMAGE DATA,       |— S101
        | PARALLAX IMAGE DATA IN        |
        +-------------------------------+
                        |
                        v
        +-------------------------------+
        | ANALYZE PARALLAX IMAGE        |— S102
        | DATA                          |
        +-------------------------------+
                        |
                        v
                                         S103
  YES          < PARALLAX IMAGE DATA ARE NORMAL? >
   |                     |
   |                    NO
   |                     v
   |          +-------------------------------+
   |          | ANALYZE STEREO IMAGE          |— S104
   |          | DATA                          |
   |          +-------------------------------+
   |                     |
   |                     v
   |                                      S105
   |            < STEREO IMAGE DATA ARE NORMAL? >——YES——+
   |                     |                              |
   |                    NO                              |
   |                     v                              |
   |          +-------------------------------+         |
   |          | MEASURE LUMINANCE             |— S106    |
   |          | ABNORMAL TIME                 |         |
   |          +-------------------------------+         |
   |                     |                              |
   |                     v                              |
   |                                      S107          |
   |            < LUMINANCE ABNORMAL TIME >             |
   |              THRESHOLD? >——YES——————————————+      |
   |                     |                       |      |
   |                    NO           +-----------------------------+
   |                     |           | NOTIFICATION OF CAMERA      |— S108
   |                     |           | ABNORMALITY                 |
   |                     |           +-----------------------------+
   |                     |                       |
   +---------------------+-----------------------+
                        |
                        v
                   ( RETURN )
```

# FIG. 5

START

PRODUCE PARALLAX VALUE
DISTRIBUTION DATA — S201

S202

NO PARALLAX — YES

NO

S203

PARALLAX
NOT LESS THAN MAX.
PARALLAX
VALUE — YES

NO

S204

PARALLAX
VALUE PEAKS ARE
NOT LESS THAN
THRESHOLD — YES

NO

S205

PREVIOUS FRAME
AND PARALLAX VALUE
DISTRIBUTION HAVE LOW
SIMILARITY — YES

NO

PARALLAX IMAGE
DATA NORMAL

PARALLAX IMAGE
DATA ABNORMAL

# FIG. 6A

N FRAME

# FIG.6B

N+1 FRAME

NORMAL: NO LARGE VARIATION IN
PARALLAX DISTRIBUTION

# FIG. 6C

N+1 FRAME

FREQUENCY
(DETECTED QUANTITY)

0            PARALLAX

ABNORMAL: NO PARALLAX IS DETECTED

# FIG. 6D

N+1 FRAME

FREQUENCY
(DETECTED QUANTITY)

MAXIMUM
PARALLAX

0            PARALLAX

ABNORMAL: A PARALLAX LARGER THAN
MAXIMUM PARALLAX VALUE
IS DETECTED

13

# FIG. 6E

N+1 FRAME

FREQUENCY (DETECTED QUANTITY)

0

PARALLAX

ABNORMAL: MANY PARALLAX PEAKS
ARE DETECTED

# FIG. 6F

N+1 FRAME

FREQUENCY (DETECTED QUANTITY)

0

PARALLAX

ABNORMAL: PARALLAX DISTRIBUTION
LARGELY VARIES

# FIG. 6G

N+1 FRAME

N+2 FRAME

⋮

ABNORMAL: PARALLAX DISTRIBUTION DOES
NOT VARY FOR A SPECIFIC TIME
ALTHOUGH IN MOTION

# FIG. 7

START

PRODUCE LUMINANCE
DISTRIBUTION DATA — S301

S302

LUMINANCE
AVERAGE CENTRAL VALUE
IS NOT GREATER THAN
THRESHOLD A

YES

NO

S303

LUMINANCE
AVERAGE CENTRAL VALUE
IS NOT LESS THAN
THRESHOLD B

YES

NO

STEREO IMAGE
DATA NORMAL

STEREO IMAGE
DATA ABNORMAL

15

# FIG. 8A

LUMINANCE HISTOGRAM

# FIG. 8B

LUMINANCE HISTOGRAM

ABNORMAL: TOO DARK

# FIG. 8C

LUMINANCE HISTOGRAM

ABNORMAL: TOO BRIGHT

# FIG. 9

**EP 2 670 147 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4285618 B
- JP 2008284389 A
- JP 3092106 B
- JP H03254733 A

**Non-patent literature cited in the description**

- A flexible new technique for camera calibration. *IEEE Transactions on Pattern Analysis and Machine Intelligence,* 2000, vol. 22 (11), 1330-1334